Europäisches Patentamt

European Patent Office

Office européen des brevets

(19)

(11) Numéro de publication : **0 478 401 A2**

## (12) DEMANDE DE BREVET EUROPEEN

(21) Numéro de dépôt : **91402240.5**

(22) Date de dépôt : **13.08.91**

(51) Int. Cl.⁵ : **A23L 1/212, A23L 1/308, A23L 1/015**

(30) Priorité : **17.08.90 FR 9010427**

(43) Date de publication de la demande :
**01.04.92 Bulletin 92/14**

(84) Etats contractants désignés :
**AT BE CH DE DK ES FR GB GR IT LI LU NL SE**

(71) Demandeur : **AGRO INDUSTRIE RECHERCHES ET DEVELOPPEMENTS 27/29 rue Châteaubriand F-75383 Paris (FR)**

(72) Inventeur : **Naudin, Olivier 3, rue des Remparts, Betheniville F-51110 Bazancourt (FR)**
Inventeur : **Josselin, Pierre 7, rue des Buttes F-94000 Créteil (FR)**
Inventeur : **De Baynast, Régis 35, rue de l'Ermittage F-78000 Versailles (FR)**

(74) Mandataire : **Bourgognon, Jean-Marie et al Cabinet Flechner 22, Avenue de Friedland F-75008 Paris (FR)**

(54) **Procédé de production de fibres alimentaires à partir de carottes et fibres obtenues par ce procédé.**

(57) On déchiquète des carottes en présence d'acide citrique, on les soumet à des opérations de pressages et de reprises en suspension (7, 10, 13, 16, 19), puis à un traitement de désaromatisation par de l'eau (27) et de la vapeur (30) et à un séchage (34). Industrie alimentaire.

EP 0 478 401 A2

Jouve, 18, rue Saint-Denis, 75001 PARIS

La présente invention a trait aux procédés de préparation de fibres alimentaires à partir de carottes et aux fibres alimentaires obtenues par ces procédés.

La fraction polysaccharidique insoluble de la carotte est une matière première de choix pour la fabrication de fibres alimentaires, en raison de sa teneur élevée en pectines et en hémicelluloses.

Jusqu'ici, les procédés permettant d'isoler une fraction insoluble de la carotte visaient à produire un jus de carotte de bonne qualité nutritionnelle (teneur en minéraux, carotène, sucres). Aussi existe-t-il plusieurs procédés de fabrication de jus selon le mode de préparation du broyat de carotte avant pressages : taille des particules du broyat, ajustement du pH, type de blanchiment, utilisation d'enzymes (These A.A. Munsch, décembre 1980, Université de Laval, Canada).

Tous ces procédés ont été optimisés en vue de produire un jus de carotte de bonne qualité nutritionnelle avec un rendement satisfaisant. Les fractions insolubles du marc de pressage (hémicellulose, cellulose et éventuellement pectines) sont partiellement désucrées et ont toujours été considérées comme sous-produits.

L'invention vise un procédé de préparation de fibres alimentaires de couleur claire, inodores, sans arrière-goût de carotte, et à haut pouvoir de rétention d'eau, n'impliquant que des traitements à l'eau, à l'exclusion de tout traitement au moyen de solvants ou d'agents chimiques de blanchiment et permettant de diminuer considérablement le volume d'eau utilisé, puisqu'une fraction de l'eau des jus obtenus par pressage peut être recyclée grâce à une séparation successive de la fraction insoluble colorée, de la fraction soluble, puis des solubles de l'eau.

L'invention a pour objet un procédé de production de fibres alimentaires de carottes, caractérisé en ce qu'il consiste :

– à presser des carottes pour séparer un jus riche en sucre d'un marc et à remettre en suspension ce dernier dans une solution aqueuse en répétant ces opérations de pressage et de mise en suspension, jusqu'à ce que la teneur pondérale en sucre du marc soit inférieure à 20 %,

– à faire passer un courant d'air ou de vapeur d'eau au travers de l'un au moins des marcs afin d'obtenir un marc désaromatisé et décoloré et un courant d'air ou de vapeur chargé d'arômes que l'on évacue, et

– à sécher le marc désaromatisé et décoloré et issu du dernier pressage.

De préférence, le procédé consiste :

– à utiliser l'eau du jus du premier pressage et/ou du second pressage, après en avoir séparé successivement les substances insolubles grossières (supérieures à 500 µm) par tamisage ou par décantation, les substances insolubles fines (concentré de carotène) par microfiltration et les sucres par évaporation ou autre osmose inverse, comme solution aqueuse de remise en suspension de marc dans une opération de remise en suspension en aval de ce premier et/ou second pressage.

– à retourner un jus d'une opération de pressage, comme solution aqueuse de remise en suspension d'un marc, à une opération de remise en suspension en amont de celle qui précède cette opération de pressage.

– à sécher le marc de fibres à une température inférieure à 85°C et sans que sa teneur pondérale en humidité devienne inférieure à 10 %.

Le procédé suivant l'invention consiste avantageusement à déchiqueter des carottes en particules de dimensions comprises entre 0,2 et 2 mm, suivi d'un traitement permettant d'inhiber les systèmes enzymatiques de la carotte puis à soumettre les carottes déchiquetées à des opérations répétées de pressages, de reprises en suspension par de l'eau ou par un jus épuisé et de repressage, jusqu'à obtention, outre de jus, d'un marc de fibres ayant, calculé sur la matière sèche, une teneur pondérale en sucres solubles inférieure à 20 % et, de préférence, inférieure à 5 %, puis à sécher le marc de fibres,

## PREMIER STADE

Le stade préliminaire du procédé consiste à déchiqueter des carottes. Ce déchiquetage, qui peut s'effectuer par broyage, fait éclater les parois des cellules et permet ainsi d'extraire ensuite, par simple pressage, aussi bien le saccharose, le glucose, le fructose, et les autres substances solubles, que des fines particules insolubles dont les grana riches en matière azotée, en lipides, et contenant en outre les pigments caroténoïdes.

Le premier stade du procédé peut être effectué au moyen d'une râpe rotative, type râpe à fruit, d'un broyeur à couronne ou de tout autre équipement ou association d'équipements capables de produire des particules aux caractéristiques sus-mentionnées.

Si la taille des particules est sensiblement inférieure à 0,2 mm, le broyat passe par fluage à travers les fentes du tamis des presses à vis hélicoïdales et, si elle est supérieure à 2 mm, le désucrage est imparfait car il n'y a pas assez de cellules éclatées,

Au cours du broyage, ou aussitôt après, par exemple moins de 30 minutes et, mieux, moins de 0,5 minute ou 30 secondes après, on procède à l'addition d'un agent acidifiant permettant d'amener le pH au voisinage de 4,3.

L'acidification peut être réalisée au moyen de tout acide autorisé dans l'industrie alimentaire et dépourvu de goût tel que l'acide phosphorique, citrique, ascorbique, malique ; on préfère l'acide citrique pour ses capacités complexantes du calcium, ce qui permet une meilleure libération des pectines solubles.

Par la suite, on injecte immédiatement de la vapeur vive dans le broyat afin d'amener sa température aussi rapidement que possible à 90°C, suivi d'un refroidissement rapide à une température de l'ordre de 60°C dans un échangeur de chaleur à plaques.

L'association de l'acidification à pH 4,3 à un traitement thermique à 90°C suivi d'un refroidissement rapide permet une dégradation efficace des systèmes enzymatiques endogènes de la carotte de type lipoxygénase, peroxydase, polyphénoloxydase, pectinestérase, galacturonase, responsables de la dégradation des carotènes naturels et des fibres, de l'apparition de goûts et de flaveurs indésirables, de réactions de brunissement enzymatiques et de coagulation des jus après pressage.

Si l'on n'acidifie pas le jus de carotte dont le pH naturel est de 6, on doit prolonger le traitement thermique pour désactiver les systèmes enzymatiques, ce qui accélère l'oxydation des alpha et bêta-carotènes présents dans la carotte rouge et qui, de plus, peut conduire à une coagulation du jus après conditionnement.

Dans le cas où l'on traite de la carotte blanche, on réalise aussi ce même traitement de désactivation des enzymes pour éviter le développement des goûts, de flaveurs indésirables ainsi que de coloration parasite due au brunissement enzymatique.

## DEUXIEME STADE

Le deuxième stade du procédé, suivant l'invention, consiste à soumettre les carottes de préférence déchiquetées à des opérations de pressages et de reprises en suspension à l'eau, jusqu'à obtention d'un marc de fibres ayant une teneur pondérale en sucres solubles (saccharose, glucose et fructose) inférieure à 20 % et, de préférence, inférieure à 5 %, puis à sécher le marc de fibres.

Il est recommandé de travailler à une température inférieure à 70°C lors des trois premières étapes de pressages et de reprises en suspension. Les opérations successives permettent d'éliminer, dans le jus de pressage, la majeure partie (90 %) du sucre et des autres matières solubles et certaines matières insolubles comme les protéines, les carotènes et les lipides, le tout dans le minimum de temps, en 20 à 30 minutes par exemple.

Le pressage peut s'effectuer soit avec des presses à vis, des filtres-presses ou tout autre équipement permettant d'exprimer un jus à partir d'un marc.

On a préféré, pour obtenir un traitement rapide et continu, adopter des presses à vis hélicoïdales à section libre décroissante (de l'entrée à la sortie) dotées de tamis à fentes transversales, perpendiculaires à l'axe de la presse : la largeur des fentes (0,160 à 0,180 mm) étant inférieure à la taille des plus petites particules du broyat (0,200 mm).

## TROISIEME STADE

Après l'extraction de la majeure partie des sucres solubles et des fines particules de matières insolubles que l'on retrouve en suspension comme les grana, organites cellulaires, de taille comprise entre 0,2 $\mu$ et 0,8 $\mu$ (Helvetica Chimica Acta 9, 705-717, 1942), riches en protéines, en lipides et en pigments caroténoïdes, il est recommandé, pour obtenir un produit de couleur claire, stable, sans odeur ni goût, d'effectuer un double traitement : l'un à l'eau chaude de préférence entre le troisième et le quatrième pressage, l'autre à la vapeur vive après le quatrième pressage. Ces traitements sont réalisés dans les conditions suivantes :

En ce qui concerne le traitement à l'eau chaude :

– ce traitement s'accompagne d'un chauffage aux alentours de 70-75°C, puis d'une détente à une pression correspondant à la tension de vapeur saturante de l'eau aux alentours de 70-75°C ;

– le rapport matière sèche du marc/eau est compris entre 1/7 et 1/30, de préférence entre 1/10 et 1/5 ; en-dessous de 1/7, le mélange est difficilement agitable et la vapeur diffuse selon des chemins préférentiels ; au-dessus de 1/30, le mélange est trop fluide pour alimenter une presse à vis ;

– la température est comprise entre 70 et 100°C, de préférence entre 70 et 75°C. En-dessous de 70°C, le marc est mal désucré et désodorisé. Au-dessus de 75°C, on "cuit" la fibre, ce qui induit une modification du comportement rhéologique des pectines qui deviennent alors très plastiques et cette fibre ne peut plus être correctement pressée dans une presse à vis ou un filtre-presse et le taux de matière sèche de la fibre est inférieur à 15 % ;

– la durée de traitement est comprise entre 5 et 30 minutes et préférablement entre 10 et 15 minutes. Des durées de traitement inférieures ne permettent pas un désucrage satisfaisant. Des durées supérieures n'ont pas d'utilité ou sont préjudiciables à la qualité de la fibre.

En ce qui concerne le traitement à la vapeur :

Ce traitement est destiné à réaliser un entrainement des terpènes constitutifs de l'huile essentielle de carotte présente en petites quantités tant dans la carotte blanche que dans la carotte rouge et, dans ce dernier cas, à parachever l'oxydation des carotènes et à entraîner à la vapeur les produits d'oxydation volatils tels que la bêta-ionone. En effet, tant les constituants volatils de l'huile essentielle de carotte (daucol, carotol) que les produits volatils d'oxydation des caroténes, tels que la bêta-ionone sont responsables d'un arôme sui generis qui limite les possibilités d'utilisation de la fibre de carotte.

Le traitement est réalisé en faisant traverser de la vapeur de préférence sèche (pour éviter la condensation de l'eau sur les fibres) surchauffée à 120°C, à travers une couche mince (inférieure à 1 cm) de fibre de carotte humide (20 % MS) pendant une durée de 10 à 30 secondes.

Cette opération de désaromatisation et de désodorisation peut être effectuée avec un turbo-cuiseur, blancheur à vapeur ou tout autre équipement permettant d'entraîner par une accumulation d'air et de vapeur les composés volatils responsables du goût et de l'odeur des fibres.

## QUATRIEME STADE

Le dernier stade du procédé consiste à sécher le marc de fibres.

Pour conserver à la fibre sèche toutes ses propriétés fonctionnelles et organoleptiques, l'humidité du marc de fibres séchées ne doit jamais être inférieure à 10 % en poids, sinon le pouvoir de rétention d'eau des fibres diminue de façon significative : de 20 à 25 g/g pour une fibre de 10 à 12 % d'humidité, ce pouvoir s'abaisse à 10 g/g pour des fibres à moins de 5 % d'humidité résiduelle.

La température des fibres ne doit pas dépasser 85°C pour éviter le racornissement qui a un effet néfaste sur leur capacité de réhydratation.

En pratique, on utilise un sécheur à air chaud co-courant à lit fluidisé par brassage interne mécanique. La température du marc à l'entrée du sécheur est de 50 à 60°C, la température de l'air de séchage est comprise entre 110 et 160°C et en réglant le débit d'air, on contrôle la température maximale atteinte par la fibre.

La séparation des buées et de la fibre sèche se fait par cyclonnage à une température supérieure à la température de rosée. La durée de résidence d'une particule de fibre dans le sécheur et le cyclone est de l'ordre de 20 à 30 secondes.

Etant donné les quantités importantes d'eau nécessaires aux différentes reprises en suspension, il est intéressant de recycler les jus de presse des troisième et quatrième étages vers les reprises en suspension réalisées à la sortie des premier et deuxième étages de pressage et de récupérer l'eau, nécessaire à la dilution du marc issu du troisième pressage, à partir des jus des premier et deuxième pressages, préalablement débarrassés des matières insolubles soit par microfiltration avec des membranes dont la taille des pores (0,14 à 0,2 micromètre) est inférieure à la taille des granas (0,2 à 0,8 micromètre), soit par osmose inverse, ou encore par distillation.

L'une des caractéristiques du procédé consiste à recycler des jus de premier et deuxième pressages débarrassés de leur couleur et de la majeure partie des particules insolubles et des produits solubles par microfiltration, suivie d'une étape d'osmose inverse ou de concentration.

Ainsi le procédé utilise uniquement l'eau constitutionnelle de la carotte pour les quatre reprises en suspension successives. L'eau en excés est éliminée dans les buées du sécheur, dans les rétentats de microfiltration et d'osmose inverse.

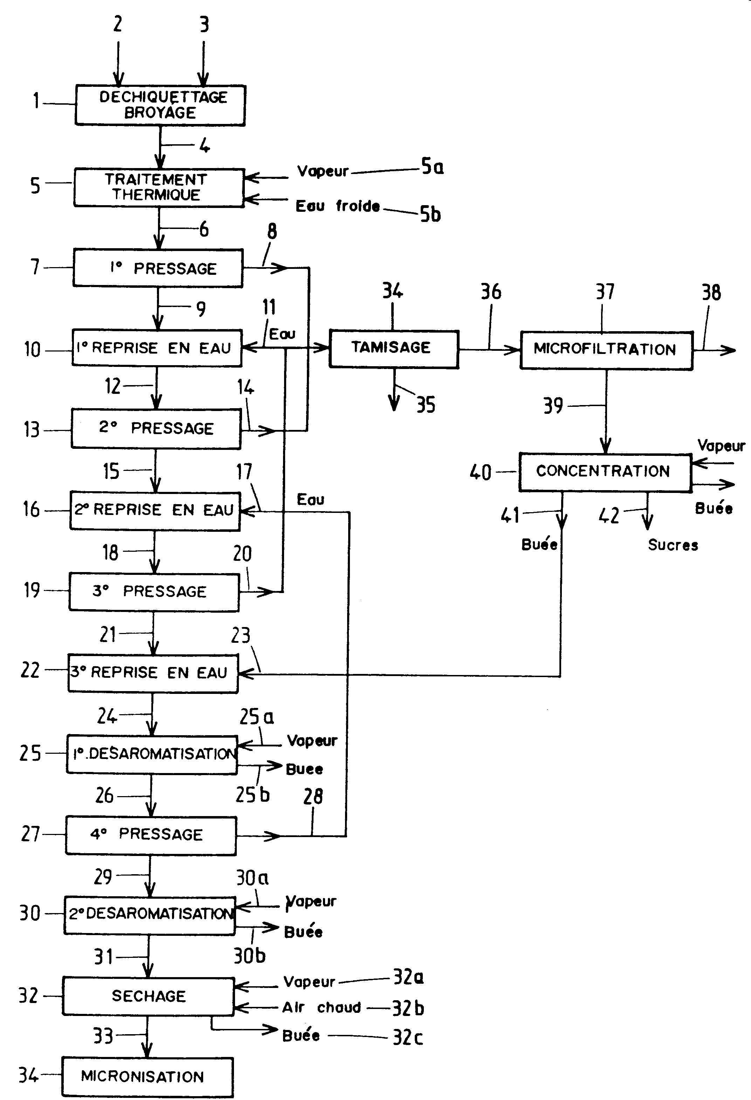

Le dessin annexé est un schéma illustrant le procédé suivant l'invention.

Le procédé comprend une opération de déchiquetage 1 des carottes amenées par un conduit 2, en présence d'acide citrique amené par un conduit 3. Les carottes déchiquetées vont par une ligne 4 à une opération 5 de traitement à la vapeur amenée par un conduit 5a, suivie d'un refroidissement dans un échangeur à plaques par de l'eau froide (20°C) amenée par un conduit 5b. Le broyat ainsi traité est conduit, par la ligne 6, à une première opération de pressage 7 permettant de séparer un jus sucré, que l'on rejette par un conduit 8, et un premier marc que l'on envoie, par une ligne 9, à un mélangeur 10 dans lequel on ajoute par un conduit 11 le jus sucré provenant par le conduit 20 du pressage 19. Du mélangeur 10, la pulpe obtenue va, par une ligne 12, à un deuxième pressage 13 où l'on sépare la pulpe en un jus sucré que l'on évacue par un conduit 14 et en un marc que l'on envoie, par une ligne 15, à un mélangeur 16 recevant, par un conduit 17, le jus sucré provenant par le conduit 28 du pressage 27. Du mélangeur 16, la pulpe obtenue va, par une ligne 18, à une troisième opération de pressage 19 donnant un jus sucré que l'on rejette par un conduit 20 et un marc que l'on envoie, par une ligne 21, à une opération de traitement à l'eau chaude 22 à laquelle on envoie de l'eau, provenant du traitement par microfiltration puis par osmose inverse et/ou évaporation des jus 8 et 14, par un conduit 23. Le marc après remise en suspension peut subir un premier traitement de désaromatisation 25, qui consiste à chauffer à la vapeur amenée par un conduit 25a le produit dans une enceinte sous un vide correspondant à une température d'ébullition de l'eau de 70°C. Les fibres séchées du conduit 33 pourraient être broyées plus finement (opération 34). Les buées sont rejetées par un conduit 25b et la pulpe, issue de l'opération 25, est envoyée, par une ligne 26, à une quatrième opération de pressage 27 où et le est séparée en un jus que l'on rejette par un conduit 28 et en un marc que l'on envoie, par une ligne 29 à une opération de traitement 30 à la vapeur vive 30 amenée par un conduit 30a dont les buées sont évacuées par un conduit 30b ; les fibres de carottes ainsi traitées sont envoyées par un conduit 31 à un séchage 32 recevant de la vapeur (conduit 32a) et de l'air chaud (conduit 32b) et rejetant des buées (conduit 32c) et des fibres alimentaires par une ligne 33. Les jus issus des opérations de pressage 7 et 13 provenant des conduits 8 et 14 peuvent être traités par une opération de tamisage 34. Les grosses particules (>500 $\mu$) sont ainsi évacuées par un conduit 35 et les jus clarifiés passent dans un conduit 36 pour subir une opération de microfiltration 37 de laquelle on évacue par un conduit 38 un concentré de carotène coloré et un jus sucré sans couleur par un conduit 39. Ce dernier subit une opération de concentration 40 qui permet de récupérer par un conduit 41 la quantité d'eau équivalente à celle qui entre par le conduit 23. Les jus sucrés concentrés sont évacués par le conduit 42 pour se diriger vers une distillerie afin de produire de l'alcool.

L'exemple suivant illustre l'invention.

## EXEMPLE 1

1000 kg de carottes rouges, titrant pondéralement 300 ppm de caroténes totaux, sont soigneusement lavées, puis et les sont broyées sans addition d'eau dans une râpe rotative et ensuite dans un broyeur à couronnes réglées de façon à fournir un broyat constitué de particules de tailles comprises entre 0,2 et 2 mm. Afin de faciliter la désactivation des systèmes enzymatiques, on ajoute au cours du râpage 10 litres de solution à 50 % en poids d'acide citrique.

Ce broyat est pressé une première fois (premier étage), le marc (238 kg) est réimbibé avec le jus de carotte épuisé provenant du troisième étage de pressage (498 kg). Il est pressé une seconde fois (deuxième étage), le marc résultant (207 kg) est réimbibé avec le jus de carotte épuisé provenant du quatrième étage de pressage (475 kg), puis il est pressé une troisième fois (troisième étage - 172 kg). Le pressage est réalisé dans trois presses à vis hélicoïdales et la réimbibation est effectuée "en continu" dans des mélangeurs centrifuges. Ce traitement prend 20 minutes et est réalisé à une température comprise entre 50 et 60°C.

Le marc issu du troisième étage de pressage est mélangé à 250 litres de jus de carotte provenant des premier et deuxième étages, préalablement microfiltré et débarrassé des sucres solubles par traitement en osmose inverse. Il est ensuite porté à 80°C. Le mélange est mis dans un récipient muni d'un agitateur efficace permettant d'assurer la mise en suspension de la fibre contenue dans le marc, maintenu sous une pression correspondant à la tension de vapeur de l'eau à 70°C pendant au moins 10 minutes et moins d'une heure. Cette opération permet une première désaromatisation de la fibre de carotte.

Le contenu du pulpeur sert à alimenter une quatrième presse à vis hélicoïdale qui fournit un marc (162 kg à environ 20 % de matière sèche totale). Le jus de pressage est utilisé pour la reprise en suspension du marc issu du deuxième étage de pressage.

Le marc chaud (50-60°C) est ensuite disposé en couche mince (inférieur à 1 cm et de préférence égal à 5 mm) entre deux toiles textiles ou métalliques traversées par un flux continu de vapeur surchauffée à 120°C pendant 1 minute, puis introduit dans un sécheur à air chaud co-courant à lit fluidisé. L'énergie nécessaire au séchage est apportée par un chauffage extérieur de la chambre du sécheur, par de la vapeur à $12.10^5$ Pascal (160°C) et par de l'air chaud à 165°C. On recueille par cyclonnage à 80°C une fibre de carotte possédant la composition et les caractéristiques données dans le tableau 1.

Les jus de premier et deuxième pressages (environ 1100 litres) sont débarrassés des fractions insolubles grossières (fluage à travers le tamis). Environ 5 % du flux de jus sont ainsi écartés avec une centrifugeuse ou un tamis vibrant. Le reste du jus est dirigé vers un appareil de micro-filtration. Cette opération permet de séparer, avec un filtre d'une taille de pores voisine de 0,2 $\mu$, les sucres des insolubles responsables de la couleur. Les particules insolubles de jus de carottes peuvent être ainsi concentrées entre 25 à 50 fois (de 10 kg à 20 kg de concentré). Le jus de carottes filtré (environ 1000 kg) est concentré à l'aide d'un évaporateur jusqu'à ce que l'on ait récupéré 250 litres d'eau nécessaire à la dilution du marc de troisième pressage. Le reste du jus (environ 850 kg) sert de substrat de fermentation pour la production d'alcool.

La teneur en fibres diététiques a été mesurée selon la méthode officielle AOAC (Association of Official Analytic Chemist, publiée par PROSKY. L. et al., J. Assoc. off. Anal. Chem. (1984), 67, 1044-1052).

La capacité de rétention d'eau est déterminée selon le protocole suivant :
– égoutter le tamis pendant 5 minutes (PO) ;
– remettre le tamis dans le cristallisoir ;
– ajouter 10 g de fibres (P) ;
– laisser reposer 20 minutes ;

– égoutter le tamis pendant 5 minutes ;

– peser (P1).

La capacité de rétention d'eau (CRE) en g/g est égale à :

$$CRE\ (g/g)\ =\ ((P1 - PO) - P)/P$$

La capacité d'échange d'ions est déterminée selon le protocole suivant :

On disperse 2,500 g de fibres broyées sèches dans 250 ml d'acide chlorhydrique 0,1 M, on maintient sous agitation pendant 16 heures, puis on filtre, on rince avec 5 x 200 ml d'eau distillée, on sèche (100°C pendant 12 heures). 1,000 g de fibres mises sous forme acide sont dispersées dans 50 ml d'eau distillée, et le pH de la suspension est ramené à 7,0 par addition de KOH 0,1 N (volume V).

La capacité d'échange de cations (CEC) en milliéquivalent par gramme de fibres (meq/g) est

$$CEC\ =\ V \times 0,1\ meq/g.$$

**TABLEAU 1**

**Composition et caractéristiques de la fibre de carotte**

| | |
|---|---|
| Humidité | 10 % |
| Composition (en % sur sec)<br>Fibres alimentaires<br>(méthode de AOAC) | 87 % |
| Protéines (N x 6,25) | 9 % |
| Sucres totaux | 3 % |
| Cendres | 3 % |
| Composition de la fraction fibre (%)<br>Cellulose | 27 % |
| Hémicellulose | 32 % |
| Pectine | 27 % |
| Lignine | 1 % |
| Capacité de rétention d'eau | 25 g/g |
| Capacité d'échange d'ions | 0,5 meq/g |
| Granulométrie | 600 $\mu$m |
| Goût | Neutre |
| Arôme | Neutre |
| Couleur | Crème |

## Revendications

1. Procédé de production de fibres alimentaires de carottes, caractérisé en ce qu'il consiste :
   – à presser des carottes pour séparer un jus riche en sucre d'un marc et à remettre en suspension ce dernier dans une solution aqueuse en répétant ces opérations de pressage et de mise en suspension, jusqu'à ce que la teneur pondérale en sucre du marc soit inférieure à 20 %,
   – à faire passer un courant d'air ou de vapeur d'eau au travers de l'un au moins des marcs afin d'obtenir un marc désaromatisé et décoloré et un courant d'air ou de vapeur chargé d'arômes que l'on évacue, et
   – à sécher le marc désaromatisé et décoloré et issu du dernier pressage.

2. Procédé suivant la revendication 1, caractérisé en ce qu'il consiste à utiliser l'eau du jus du premier pressage et/ou du second pressage, après en avoir séparé successivement les substances insolubles grossières (supérieures à 500 μm) par tamisage ou par décantation, les substances insolubles fines (concentré de carotène) par microfiltration et les sucres par évaporation ou autre osmose inverse, comme solution aqueuse de remise en suspension de marc dans une opération de remise en suspension en aval de ce premier et/ou second pressage.

3. Procédé suivant la revendication 1 ou 2, caractérisé en ce qu'il consiste à retourner un jus d'une opération de pressage, comme solution aqueuse de remise en suspension d'un marc, à une opération de remise en suspension en amont de celle qui précède cette opération de pressage.

4. Procédé suivant l'une des revendications précédentes, caractérisé en ce qu'il consiste à sécher le marc de fibres à une température inférieure à 85°C et sans que sa teneur pondérale en humidité devienne inférieure à 10 %.

5. Fibres alimentaires, neutres aromatiquement et gustativement, de couleur claire, ayant une capacité de rétention d'eau d'au moins 20 g/g et une capacité d'échange d'ions d'au moins 0,4 meq/g et susceptibles d'être préparées par un procédé suivant l'une des revendications précédentes.